# EUROPEAN PATENT APPLICATION

(11) **EP 2 760 097 A2**
(43) Date of publication of application: **30.07.2014**
(21) Application number: 12834173.2
(22) Date of filing: 11.09.2012
(51) Int. Cl.: H02J 3/14

(54) **SYSTEM FOR PREVENTING DISASTERS CAUSED BY POWER SUPPLY AND DEMAND MISMATCHES**

(30) Priority: 19.09.2011 KR 20110094315; 18.11.2011 KR 20110120690; 26.11.2011 KR 20110124675
(71) Applicant: Choi, Changjoon, Anyang-si, Gyeonggi-do 431-804 (KR)
(72) Inventor: Choi, Changjoon, Anyang-si, Gyeonggi-do 431-804 (KR)
(74) Representative: Izquierdo Faces, José
(86) International application number: PCT/KR2012/007276
(87) International publication number: WO 2013/042893

(57) **Abstract**

According to the present invention, if a power reserve margin falls under a given value due to the power-supply-demand-mismatch problem in a wide area electricity supply network, this situation is intentionally reflected to the quality of electricity, or a low quality of electricity is naturally supplied. Accordingly, the quality of the electricity supplied is recognized at each consumer, so that the end loads of each consumer or the target controlled values of the end loads appliances are increased, decreased, cut off (end loads),or turned off(target controlled values) in accordance with the quality of the electricity and priority values previously conferred to the appliances.

## Description

### [Technical Field]

The present invention relates to all kinds of electric appliances of consumers to which electric power is supplied via outlet, to the power generation, power transmission and power distribution processes at the supply side in an electric power system network, and to the distribution process of the electricity incoming to consumers at the demand side.

According to the present invention, if a power reserve margin falls under a given value due to the power-supply-demand-mismatch problem in a wide area electricity supply network, this situation is intentionally reflected to the quality of electricity, or a low quality of electricity is naturally supplied. Accordingly, the quality of the electricity supplied is recognized at each consumer, so that the end loads of each consumer or the target controlled values of the end loads appliances are increased, decreased, cut off (end loads),or turned off (target controlled values) in accordance with the quality of the electricity and priority values previously conferred to the appliances. If the power-supply-demand-mismatch in the whole electric power system network occurs, the demand for the electricity load having low priority in the consumer side is step by step decreased or cut off, thus the total electricity demand in the whole electric power system network is regulated to proper level.

So as to be buffer for the supply and demand gap of the electricity for the prevention of the occurrence of the blackout over a wide area, a high power reserve margin is needed for maintaining the supply higher than the demand, and in a normal state, therefore by the present invention, the power reserve margin can be relatively maintained to a low value, thus reducing a power generation fuel cost.

If the power reserve margin falls to a risk level due to accidents or excessive power consumption in the electric power system network, the voltage, frequency, distortion, and other qualities of electricity as the quality components of the electricity are deviated from standard reference values in grades under the regulations of the protocols set intentionally by the power supply side, so that the electricity having the quality mapped to the corresponding grade is supplied to the consumer, thus transmitting the information on the risk level of the power reserve margin by means of broadcasting.

Moreover, even in case where the quality of the electricity naturally falls due to the failure of the gentle power supply in the electric power system network or local system, the quality of the electricity incoming is checked at a distribution system in the consumer or at end electric appliances via outlets.

If the present invention is applied to the cabinet panel system, end branch loads in the consumer are selectively step by step cut off in accordance with the degree of urgency. If the present invention is applied to the electric appliances, the introduction of the electricity corresponding to the urgency grades applied to the electric appliances is recognized to take the corresponding action prearranged before the loads of the electric appliances are cut off, and next, the loads of the electric appliances are cut off. Otherwise, increment/decrement signals for control target values to be controlled by the electric appliances are generated to adjust the loads for the target control or to cut off the loads themselves, so that the power demand of each electric appliance is automatically increased, decreased or cut off at the consumer side of the electric power system network, and further, the broadcasting of the risk state information is possible over a wide area, thus decreasing the total power demand in the whole electric power system network automatically maintains the supply network capability of preventing the disaster caused by depletion of the power reserve margin.

The features of the present invention include the technology of changing the quality components of the electricity in the power production and supply process, recognizing the quality components of the electricity in the cabinet panel of the consumer or the electric appliances, and also include the management technology of the loads on the basis of the recognized information or the management technology of the control target values determining the load amount by recognized information, and include the technology of systematic management of the risk degree of the electric power system network reflected on the quality of electricity.

### [Background Art]

Various quality values inclusive of basic values such as voltage, current, and alternating frequency, distortion, and contents related to time and energy are obtained as physical values of electricity. Good quality electricity means the electricity having proper voltage, alternating frequency within a constant range and no electrical flickering, maintaining sine wave to provide low distortion, and having no voltage disturbance such as momentary overvoltage, voltage sag, harmonic distortion and the like.

Given target standard reference values are set as the quality values of the electricity, and they are technically managed to stay within a given error range. However, the quality of electricity is deteriorated due to various reasons and deviated from the error range. The worst quality electricity is blackout or temporary stop, and the worst disaster situation is blackout over the country caused by the overload due to the power-demand-supply-mismatch in the whole electric power system network. So as to prevent the occurrence of the blackout, the supply and demand of the electricity are always monitored in a power company or Power Exchange, while maintaining spare power reserve margin.

Further, the quality components of the electricity can be easily monitored technically at the end electricity consumer side. They can be monitored through a voltmeter, an ammeter and an oscilloscope for a laboratory, and moreover, high price equipment for precise measurement is provided. The technology for measuring the voltage and frequency is developed a long time ago, and the success in the modularization for the measurement is dependent upon whether the cost for the measuring means is low or not.

General electricity consumer distributes and branches the outside power to the outlets or lamps of each room via a cabinet panel. The branch power circuits, which are connected in parallel to each other and maintained in the same voltages as each other, have different grades in accordance with the kinds of their end load and used limitedly by the switch for selectively cutting off the end loads.

The general cabinet panel has a safety device capable of cutting off the branch circuits by means of a manually operating switch and automatically and selectively cutting off the power when over voltage or other abnormal state occurs. A control device for electrically operating the safety device having the switch function is proposed to automatically cut off the end loads of the branch circuits at a moment desired from the outside or in accordance with given logic algorithm, but this technology is not hard.

In case of electric appliances, it is sufficiently possible that the grades of the fundamental frequency electricity's quality such as the voltage, fundamental frequency, and distortion of the electricity incoming are recognized in accordance with previously set references. It is not hard to transmit the information on the grades to the outside terminal or to cut off the electricity load itself.

According to the present invention, the quality index of the electricity incoming from the outside is analyzed, and the corresponding emergency index is set depending on the degree of deviation from the standard reference value, or depending on the time variation pattern in accordance with previously agreed protocols, thus recognizing whether the electricity is introduced in correspondence with the emergency index.

After the recognition, in case of the cabinet panel to which the present invention is applied, the branch circuits whose priority is previously set are automatically selectively cut off or connected again step by step by priority. In case of the electric appliances to which the present invention is applied, the grade information of the emergency index is provided to a port and used as a cut-off, increment and decrement signal of the load itself, for increasing, decreasing or setting a control target value determining the load amount, or for cutting off the power itself driving the load. Moreover, the port information is functioned as a trigger signal for ordering the electric appliances to perform the prearranged operations before the power cut-off, thus providing a safe load cut-off method.

Those who produce and supply electricity from the outside of consumers can get the technical means capable of transmitting partial cut-off control in the use of electricity by means of the production and supply of the electricity intentionally deviated from the agreed standard reference value as broadcasting.

If the power reserve margin falls under a given level, the reduction of the power reserve margin is divided into risk grades, and it is not hard that the electricity having the voltage, frequency, distortion and other qualities intentionally deviated from the standard reference value is produced and supplied in each step of the power system such as power generation, power transmission and power distribution. Theoretically, a low voltage can be achieved by means of the selective operation of additional transform, and the change of the automatic control target value of the rotating speed of a generation turbine.

As similar technologies to the above-mentioned manner, there are smart grid technologies, which transmit the power use state of the whole electric power system network and the electricity cost information to each consumer through power line communication, dedicate internet service cable, and wideband radio communication whose frequencies are high, and based upon the information, each consumer determines the use methods of the electric appliances and whether the electric appliances are used or not.

As separate communication means is needed, however, communication security problems have occurred, and further, the receiving equipment price or communication expense problem is assigned to each consumer. Accordingly, this method is not economical when compared with the present invention wherein information on the basic physical values recognizable from the fundamental frequency waveform of the supplied electricity is sent to each consumer.

### [Disclosure]

### [Technical Problem]

Accordingly, the present invention has been made in view of the above-mentioned problems occurring in the prior art, and it is an object of the present invention to provide an power-supply-demand-mismatch disaster preventing system that is capable of preventing selective temporary stop in the supply of electricity from being conducted when a power reserve margin falls under a given level due to power demand exceeding power supply in the whole electric power system network, preventing blackout from occurring when the quality of electricity of the whole electric power system network is below a level in use, and saving a power generation fuel cost required for producing a larger amount of reserve power than an actual amount of power needed.

It is another object of the present invention to provide an power-supply-demand-mismatch disaster preventing system that is capable of broadcasting risk grade information on the power supply and demand state in the electric power system network to each consumer in undifferentiated and economical methods and step by step automatically adjusting the power demand in the consumer on the basis of the broadcast information, in accordance with the priority of electric appliances.

It is still another object of the present invention to provide an power-supply-demand-mismatch disaster preventing system that is capable of cutting off the end branch loads at the cabinet panel side in accordance with the degree of their importance, for the application to the electric appliances in a building, previously applying priority to each electric appliance and appropriately adjusting or cutting off the load of each electric appliance on the basis of the power state information in the whole electric power system network extracted from the electricity incoming.

It is yet another object of the present invention to provide an power-supply-demand-mismatch disaster preventing system that is capable of allowing an electricity supplier to supply the electricity deviated somewhat from a reference value established in electricity quality index or the high and low time change patterns of the degree of deviation of the electricity in accordance with the patterns of the previously agreed protocols regulations to consumers and allowing each consumer to analyze the supplied electricity by branch circuit unit of the cabinet panel or by the electric appliance using load, thus adjusting the load in accordance with the priority, so that the information is transmitted together with the fundamental frequency of the electricity supplied at the same time from wide area electricity supply network by means of broadcasting at one time.

### [Technical Solution]

Electricity quality references are different every country when they reach general consumers through systematic processes such as production, transmission and distribution of electricity, but in case of Korea, it is recommended that fundamental frequency waveforms of electricity, 110±6 V, 220±13 V, 380±38 V, and 60±0.2 Hz be observed according to implementing regulations on the law of electricity business (in September 2011). If they are called representative electricity quality indexes, the electricity quality indexes have upper and lower margins with respect to given references. In the power system having the electric power network, the consumers connected after a given distribution system receive the electricity having the same quality as each other, and the electricity quality indexes of the electricity are the same each other.

In case where a given quality index, for example, 220-10 V of electricity is supplied intentionally to the consumers, specific information, 10, as a concept of broadcasting, can be transmitted to the region of the corresponding consumer group. A separate margin is set within the upper and lower margins or at the outside thereof, and the degree of deviation from the separate margin is set as power emergency steps, thus unilaterally transmitting the emergency steps to the consumers in the corresponding region by means of broadcasting.

For example, a given margin is set to 220V of consumer, and if it is assumed that ±10 V is normal electricity supply, -11 V is a first risk step, -12 V is a second risk step, and -13 V is a third risk step, and otherwise, if risk step numbers are applied to adjustable bandwidths, the corresponding electricity is supplied to the whole consumer after the corresponding distribution system, thus easily notifying the consumer of the current risk steps in the power supply.

Precise control for the quality of the electricity supplied to the consumer end allows a large number of identifiable values to be transmitted over wide range through more precise resolution. In this case, 220 V reference value is just control target value, and the real value indicates an irregular value varied in accordance with local situations and supply and demand states. However, the resolution value is set in a given section and a margin is given to the resolution value, thus transmitting accurate value of the given information.

So as to transmit safer and more accurate information, the quality of the electricity is processed in accordance with the degree of deviation of the electricity physical values from the center value and the high and low time change patterns under the previously agreed protocols, and the processed electricity is supplied. Next, the quality of the electricity incoming to the cabinet panel or the electric appliances of the consumer is analyzed on the basis of the protocols in accordance with time changes, so that it is determined whether the transmitted information is reliable or not, and the application is determined in accordance with the determined results.

When phase shifts are abruptly generated in the fundamental frequency waveforms of the electricity, given information can be mapped to the phase shift amount and thus transmitted. The transmitted information allows the cabinet panel of the consumer to analyze the risk step indexes of the electricity, and the distributed end loads in parallel connection are cut off or connected again in accordance with the respective risk steps by means of any kind of switching mechanisms such as relays, fuses, or phototransistor, so that power is selectively automatically cut off or connected again in accordance with the risk steps at the consumer side, thus achieving the selective and step by step cut-off and connection automatically in accordance with the risk steps in the power use in the wide area power network and the priority of the end loads.

The load can be cut off in the cabinet panel level of the consumer, but the quality of the electricity incoming can be determined in the electric appliance level used by the consumer. Based on the degree of deviation of the quality of electricity from the reference value or on the high and low time changes of the quality of electricity regulated in the protocols or on the phase shifts, accordingly, it is determined whether the loads of the corresponding electric appliances are cut off or not in accordance with the previously set references, and further, control target values controlled by the electric appliances can be increased, decreased, or changed. If the load should be cut off, moreover, a command signal for prearranged operation can be generated before it.

### [Advantageous Effects]

According to the present invention, the power-supply-demand-mismatch disaster preventing system can prevent blackout as a national disaster caused by wars, accidents in power plants, drastic over load and the like and further prevent intentional stop in supply of electricity for avoiding the occurrence of the blackout. Only the end loads having low priority are step by step, selectively, nationally or over a wide area cut off or adjusted in accordance with the degree of social importance of the electric appliances in each consumer.

The power loads having high priority grades such as transportation facilities, hospital emergency facilities, security-related electricity facilities, important industrial facilities, computer networks, apartment elevators, and the like are maintained, while the end loads having low priority grades are being step by step, selectively, nationally or over a wide area cut off or adjusted.

The selective cut-off and adjustment of the end loads are conducted through the simple manipulation of the partial increment or decrement of the physical quantities of the electricity waveform of the fundamental frequency such as voltage and frequency of the electricity, which simply transmits the information to all consumers automatically by means of broadcasting, thus reducing the maintenance cost.

If the loads are automatically cut off or the control target value like an indoor temperature is automatically changed to a state for saving electricity on the basis of the information contained in the electricity incoming to the electric appliances of the consumer such as air conditioners and electric heaters requiring large power consumption and power device like a motor, a reference value of the power reserve margin, which is unnecessarily maintained high to avoid the occurrence of blackout in an emergency state, can be set to a low value, thus reducing an enormous power generation fuel cost.

Referring to the smart grid technology emerged as means adjusting peak power use, the smart grid technology transmits the current power use amount or the cost of the power rate applied in proportion to the power use amount to each consumer through wire internet, wireless internet network, or high frequency band of the power lines, and the information on the power use of the whole electric power system network transmitted through the communication lines of the wire or wireless internet or the power line communication network is analyzed in the consumers, thus determining whether a given electric appliance is used or not.

However, the present invention has more excellent advantages than the smart grid technology, which are as follows: first, the present invention does not need to build a separate communication network and further does not have any particular receiving facility in the consumer. If the internet network or other communication networks are built, separate building cost is needed and ordinary communication expenses for maintaining the communication networks are further required. The electricity demand in a normal state, not in an emergency state can be advantageously flattened, but an excessively higher system maintaining cost than the risk information transmitting method through the fundamental frequency of the electricity is required, which is not desirable in the introduction into developing countries or underdevelopment countries.

Second, the communication networks of the smart grid technology are weak in security, and so as to avoid the problems in security, accordingly, enormous cost and endeavor may be consumed. However, if the information on the variations of the fundamental frequency waveforms of the electricity is transmitted, it is necessary to control electricity supply means supplying high power so as to change the information. In this case, if it is not possible to access the facilities taking charge of electricity system, the information cannot be changed.

Last, if the supply and demand state of the electricity network system is unstable, the supplied electricity is naturally changed to bad quality state, without having any intentional adjustment or even in the malfunction of the intentional adjusting device, and accordingly, the risk steps are transmitted to the consumers, thus performing demand adjustment.

### [Description of Drawings]

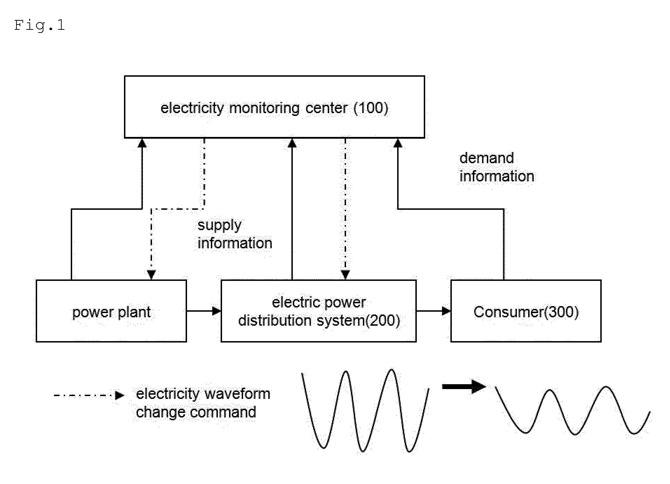

FIG.1 is a block diagram showing the configuration of an power-supply-demand-mismatch disaster preventing system according to the present invention in a whole electric power system network.

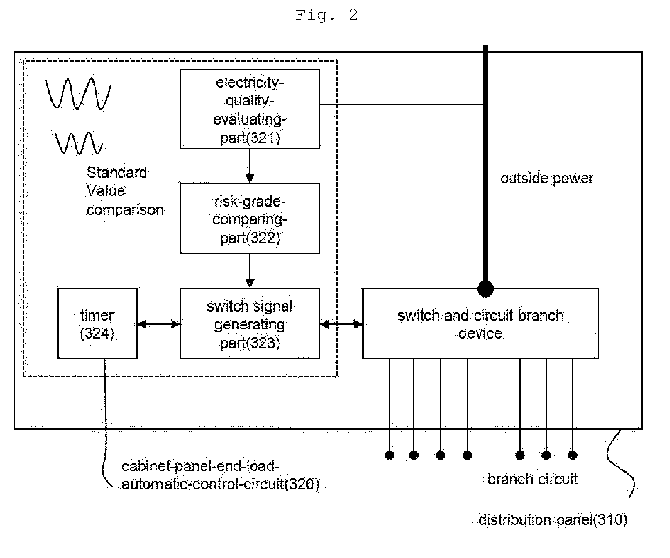

FIG.2 is a block diagram showing the power-supply-demand-mismatch disaster preventing system according to the present invention serving as a portion of an indoor cabinet panel.

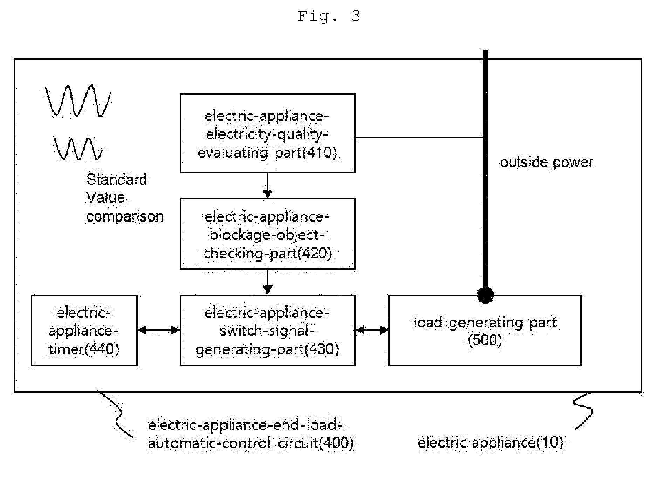

FIG.3 is a block diagram showing the power-supply-demand-mismatch disaster preventing system according to the present invention serving as a portion of an electric appliance.

### [Best Mode for Invention]

The present invention is aimed at achieving a public purpose such as public safety through the protection of an electric power system network and the reduction of the cost of fuel for electric power generation according to lowered power reserve margin, while needing a public system that infringe the interests of personal users during emergency states as their desire to use their electric appliances are generally ignored in the emergency state.

For example, an authentication system like an EDPS (Electricity Disaster Preventing System) may be introduced wherein appropriate grading is provided to each electric appliance and a hologram mark is then attached to the electric appliance in accordance with the grading. Next, incentives such as assessment/exemption of special consumption tax, differential tax rate systems and the like are provided to the electric appliances in accordance with the acquirement of the authentication system, which are applied to household or personal electric appliances. The authentication system is of course provided compulsorily to the electric appliances in government and public organizations, and is step by step provided legally to them in commercial facilities used by many people.

If the authentication system is provided to each electric appliance, an electricity disaster prevention function is carried out through a given operation.

Each parts of the present invention will be explained in the following description.

If it is determined that incoming electricity is deviated from a standard electricity quality or that the electricity is introduced in accordance with the time change patterns in the deviated degree from the standard electricity quality, an electricity emergency index can be determined by result of incoming electricity analysis based on the protocols.

In case of an air conditioner, as the grade of the electricity introduced from the outside is lowered, a digital signal through which a target indoor temperature to be controlled by the air conditioner is raised is generated from an electric-appliance-switch-signal-generating-part, and the generated digital signal is sent to a controller of the air conditioner, thus allowing the target indoor temperature to be raised. As a result, the operation of the air conditioner stops. In case of an electric heater, contrarily, the above-mentioned process is carried out to allow a target indoor temperature of the electric heater to be lowered.

In case of a rotary power device such as a motor, signals lowering RPM are generated in order, thus stopping the rotation of the motor.

In case of a refrigerator, the freezing temperature or freezing strength of a freezing room and the appropriate temperature of a cold room are changed.

In case of an elevator, the system of the present invention is not applied to an emergency elevator, but in case of the elevators having low grades, their limited operating floors can be extended in accordance with the electricity incoming. Particularly, the elevator automatically moves to first floor and waits in the state of being open in accordance with the grade, thus preventing passengers from being closed in the elevator due to blackout.

In case of PC power, if the PC power is under a given grade, a prearranged operation for preparing blackout is carried out, that is, an interrupt signal connected to a main board of the PC is generated to conduct the prearranged operation for saving data and parking a hard disc.

In case of the blackout caused by accidents, such prearranged operation needs a separate energy storage system, but in case of the intended blackout or cut-off, the prearranged operation and safe power-off can be achieved, without having any energy storage system.

In case of a cabinet panel, the whole branch in home electricity is selectively disconnected.

In case of outdoor lighting lamps, lamps having different grades by even and odd numbers or alternately are installed, and they are changed in illumination or turned off automatically alternately or in given order in accordance with the information of the electricity supplied from the outside, thus achieving electricity reduction and electricity power demand management.

An electric iron, toaster, and other electric heaters have a short period of use time, and therefore, since they have relatively low electricity cut-off necessity, appropriate grades are applied to them.

### [Mode for Invention]

Hereinafter, an explanation on an power-supply-demand-mismatch disaster preventing system according to the present invention will be in detail given with reference to the attached drawings.

A power company or Power Exchange has monitored current electricity power supply and demand all over the country. If it is assumed that the power company or Power Exchange is called an electricity-monitoring-center 100, the electricity-monitoring-center 100 serves to maintain a power reserve margin meaning the difference between the electricity power supply and demand to a given value. If the power reserve margin falls under the given value, risk steps are recognized in accordance with the lowered power reserve margin, the physical values, that is, voltage, frequency, distortion, and phase shifts, in quality view of the fundamental frequency waveform for the electricity supplied to the consumer in the steps of power generation, power transmission and power distribution toward a consumer 300 in a power generation and transmission system are deviated by a given degree from a given reference value or have given high and low time change patterns in the deviated degree in accordance with previously set protocols, thus producing or processing and supplying the electricity. Even in case where the above-mentioned intended procedure is omitted due to troubles, the electricity having the physical values deviated by the given degree from the given reference value can be supplied without trouble in accordance with natural generation of quality reduction of the voltage or frequency of the fundamental frequency electricity due to the power-supply-demand-mismatch in the electric power system network.

At the electric appliances or introduction ends of a cabinet panel, the quality of electricity is determined, and if the determined quality of electricity corresponds to the applied grade, the present invention is adopted as a switch controlling the electricity load thereof, as a circuit generating a signal by which a target control value to be controlled by the electric appliance is increased or decreased, as a modularized part to which the circuit is applied, or as an electric appliance to which the modularized part or circuit is applied.

A method for transmitting the risk steps from the electricity monitoring center 100 to an electric power distribution system 200 and a method for processing the electricity to the electricity having the quality deviated from the standard target reference values of the electricity quality indexes in accordance with the risk step information set to the consumer 300 are carried out in various manners. The supply of the electricity having appropriate electricity quality indexes to the electric power distribution system 200 like a electric power substation or to the consumer 300 in the power generation and transmission steps can be controlled.

Previously agreed protocols are regulated in accordance with the time change patterns of the electricity quality indexes, and the electricity is produced or processed in accordance with the agreed protocols, thus transmitting the electricity to the consumer. The consumer uses the electricity according to the protocols. Moreover, information on the generation of the phase shifts of the electricity waveforms of the fundamental frequency or on the shift amount is transmitted together.

Generally, the electricity supply-demand-mismatch disaster preventing system according to the present invention is adopted to the cabinet panel of the consumer to perform integral demand management and further adopted to each electric appliance, and the respective cases will be described.

In case of the cabinet panel, first, a system is needed wherein priority grades are applied to respective cabinet panel end loads connected in parallel upon the distribution of the consumer. The system will be called 'consumer-load-priority-grading-system'. That is, the priority grades are set in accordance with the features of the end loads of the cabinet panel divided into lamps, outlets, and other power, and marks for the priority grades should be preferably attached to the outlets. For example, a best grade group is applied to national defense, administration, public transportation, network, finance, emergency rooms, and government organizations, which is excluded in the cut-off on the cabinet panel according to the electricity quality. A household upper grade group is applied to a refrigerator, a single lamp and a single outlet around a TV set for emergency broadcasting listening, and a lower grade group is applied to other electric appliances. In case of buildings or apartments used by many people, a first priority grade is applied to elevators, security-related equipment power, fire-extinguishing equipment, escape induction lamps and the like, a second priority grade to hallway power toward the elevator and lamps for vehicle induction of parking lots, a third priority grade to other illumination outlets and the like, and a third priority grade to auxiliary facilities such as outside propagation board lamps, gardening lamps, public facilities for decoration and the like.

Under the admission of fire departments or power companies, a separate upper grade is applied to aquariums, electricity for protecting lives, and other facilities causing enormous damages through the electrical quality or power off in even commercial building or facilities.

Next, a cabinet-panel-end-load-automatic-control-circuit 320 will be explained, and the cabinet-panel-end-load-automatic-control-circuit 320 determines the risk step information for the supplied electricity whose electrical quality is deviated intentionally from the standard reference value or phase shift occurs, which is sent to the electric power distribution system 200, and selectively cuts off the end loads having the corresponding grades among the respective end loads sequentially or connects them again in accordance with consumer load priority grading system.

If the grades are changed, power can be immediately connected again to the end loads having the upper grade, and alternatively, a timer is operated to set time for the reconnection, while having a given interval.

The cabinet-panel-end-load-automatic-control-circuit 320 constitutes a portion of the cabinet panel 310 and serves to join the electricity distribution process of distributing the electricity incoming to the electric power distribution system 200 along the electric power system network to all kinds of lamps, outlets and other electric appliances through the wiring in the consumer to automatically cut off or connect the end loads.

The cabinet-panel-end-load-automatic-control-circuit 320 may be added as a form of a module to the existing cabinet panel 310 and may be combined integrally to other circuits of the cabinet panel 310.

If the deviation, from the standard reference value, of the voltage or frequency of the fundamental frequency waveform of the electricity incoming to the consumer from the outside or the amount of phase shifts when the phase shifts are generated and the time change patterns of the electricity quality are regulated in the previously agreed protocol, the cabinet-panel-end-load-automatic-control-circuit 320 analyzes the intention of the electricity quality features in view of the power generation, power transmission and power distribution in accordance with the previously set protocol. Further, the cabinet-panel-end-load-automatic-control-circuit 320 includes an electricity quality evaluating part 321 checking whether a special risk step signal is broadcast to each consumer from the electric power distribution system 200 or the electricity monitoring center 100 such as the power company or Power Exchange, and accordingly, the cabinet-panel-end-load-automatic-control-circuit 320 selectively cuts off or connects again the respective branch circuits of the cabinet panel 310 in accordance with the determined result.

The electricity-quality-evaluating-part 321 analyzes the protocol if the deviated degrees of the electricity from the given standard reference value or the time change patterns are managed by the protocol on the basis of the physical constants indicating the voltage, frequency and other electricity qualities of the fundamental frequency waveform of the electricity incoming, and recognizes the meaning reflected on the electricity quality.

A risk-grade-comparing-part 322 compares the signal recognized in the electricity-quality-evaluating-part 321 with the risk grade information by the predetermined deviation amount or by the deviation time pattern protocol analysis and determines whether any branch circuit cuts off or not.

Further, a switch-signal-generating-part 323 is added to a blockage device of cabinet panel like a switch so as to produce electrical, mechanical, optical, or other physical signals controllable. Through the determining results of the electricity-quality-evaluating-part 321 and the risk-grade-comparing-part 322, the branch circuits can be selectively cut off or connected again through the switch-signal-generating-part 323.

The cabinet-panel-end-load-automatic-control-circuit 320 selectively cuts off or connects again the respective branch circuits of the cabinet panel 310 in accordance with given conditions. If they are cut off or if the broadcasting information of the grade wherein the branch circuits can be connected again is checked, a timer 324 for time management is provided to connect them again after a given period of time is passed. It is not desirable that the electricity deviated from the standard reference value be supplied to a consumer for a long period of time, and therefore, even if the electricity having the standard reference value is supplied within a given period of time, the end load being cut off due to their low priority is not connected again immediately. Accordingly, so as to continuously supply high quality electricity to the upper grade electricity load, the timer 324 is provided to maintain the cut-off state for a given period of time.

The cabinet-panel-end-load-automatic-control-circuit 320 is additionally attached to the existing circuit of the cabinet panel 310 as a form of a circuit, a form of a part whose circuit is modularized, or a form of a board constituting the circuit. Or it is made as a unitary body to the cabinet panel 310. The respective parts constituting the cabinet-panel-end-load-automatic-control-circuit 320 may be combined with a single electrical device, separated to a form of a module in such a manner as to be connected to each other, or separated to a form of an individual in such a manner as to be circuit-connected to each other.

The branch circuits of the cabinet panel 310 should be distinguishedly branched in accordance with the previously designated grades, and the cabinet panel 310 should be also configured selectively cut off or connected by means of the cabinet-panel-end-load-automatic-control-circuit 320. The branch circuits having upper grades on the cabinet panel 310 are indicated on the outlets as their end loads by means of various identifying manners such as marks, and if a portion of power is cut off in an emergency state, it is very convenient to find the branch circuits having upper grades. So as to prevent a tap by which branching is possible from being connected to the outlets having upper grades, if more than given load is applied, the load is cut off.

The branching in the cabinet panel 310 and the selectively cut-off of the load in accordance with the priority may charge the cost of the indoor wiring, and further, it is hard to conduct them rapidly over a wide area. So as to avoid the above-mentioned problems, the information on the electricity quality incoming to the electric appliances in the electric appliances used not by the cabinet panel, but by the consumer is analyzed and the load itself of each electric appliance is cut off for a given period of time.

The electricity incoming to the electric appliances is used for the power for controlling the electric appliances through a regulator or pressure division or used for the power for driving the circuit according to the present invention. Alternatively, the electricity is used as means for recognizing the quality of the electricity incoming by transforming the electricity incoming through precise proportion and inputting the transformed electricity to a terminal of a microcontroller as an analog signal value.

According to the present invention, a circuit having a switching function, a modularized part to which the circuit is applied, or electric appliances to which the part or circuit is applied is provided to determine whether the quality of the electricity connected to the incoming ends of the electric appliances and supplied therefrom is varied or generates phase shifts and to stop the generation of the electrical loads of the electric appliances for a given period of time.

An explanation on the configuration of the internal parts of an electric-appliance-end-load-automatic-control-circuit 400 performing the above-mentioned functions in an electric appliance will be in detail given. The electricity incoming through the electric power distribution system along the electric power system network and the indoor cabinet panel of the consumer is supplied to an electric appliance 10 through an electric outlet. The electric-appliance-end-load-automatic-control-circuit 400 is formed as a circuit integrated with a part of the electric appliance 10, a modularized part, or an arranged PCB board.

The electric-appliance-end-load-automatic-control circuit 400 has an electric-appliance-electricity-quality-evaluating-part 410 adapted to determine whether the voltage or frequency of the electricity incoming to the electric appliance through the outlet is introduced to a degree of quality deviated from the standard reference value or to degree of quality having given high and low patterns or whether the phase shift in the fundamental frequency of the electricity occurs or not. Accordingly, a risk step signal indicating power reserve margin is close to 0% is transmitted in the form of physical qualities of the electricity from the electric power distribution system or power generation and transmission systems or the power company or Power Exchange to each consumer by means of broadcasting.

In accordance with the determined results of the electric-appliance-electricity-quality-evaluating-part 410, the function of an electric-appliance-load-generating-part 500 is selectively cut off or kept. The electric-appliance-electricity-quality-evaluating-part 410 recognizes and analyzes the degree of the deviation of the electricity from the standard reference value or the high and low time patterns on the basis of the physical constants indicating the voltage, frequency and other qualities of the electricity incoming to the electric appliance.

Further, an electric-appliance-blockage-object-checking-part 420 checks whether the real load of the electric appliance controlled by the circuit function unit of the present invention is cut off or not on the basis of the information recognized by means of the electric-appliance-electricity-quality-evaluating-part 410. If the blockage object is checked, further, an electric-appliance-switch-signal-generating-part 430 is provided to stop the function of the electric-appliance-load-generating-part 500, which is added to a switch type blockage device so as to generate a signal controllable to electrical, mechanical, optical and other physical signals such as a relay, fuse, phototransistor and the like. In accordance with the determined results of the electric-appliance-electricity-quality-evaluating-part 410 and the electric-appliance-blockage-object-checking-part 420, the electric-appliance-switch-signal-generating-part 430 determines whether the load of the electric appliance is usable or not.

The electric-appliance-blockage-object-checking-part 420 previously determines whether the load of the electric appliance is cut off or not in correspondence with a degree of the electricity quality determined by the kinds of the electric appliance in accordance with the kinds of electric appliance such as an air conditioner, electric heater, motor and the like and all kinds of grades determined by public organization or authoritative organization, and it varies the kind or grade of the electric-appliance-end-load-automatic-control-circuit 400 and stores the object checking range of the electric-appliance-blockage-object-checking-part 420 as the grades differently determined in accordance with the priority of the electric appliance to which the corresponding module is mounted. Next, the electric-appliance-blockage-object-checking-part 420 compares the stored grade with the electricity quality recognized by the electric-appliance-electricity-quality-evaluating-part 410, thus cutting off the function of the electric-appliance-load-generation-functioning-part 500 by means of the module. The cutoff method is performed by cutting off the function of the electric-appliance-load-generation-functioning-part 500 or by generating a restarting signal through electrical, mechanical, optical, or other physical means.

The electric-appliance-switch-signal-generating-part 430 can output a control target value setting signal as a separate signal related to the increment/decrement, variation, and control finish restarting of a control target value to be controlled by the electric appliance in correspondence with the quality of the electricity incoming, to the outside.

If the grades determined for the quality of the electricity incoming from the outside are for example divided into R1, R2, R3 and R4, the digital values of the control target value setting signals representing the qualities of each electricity are outputted as 00, 01, 10 and 11 or the analog values thereof are outputted, and the outside control module varies the control target values to be controlled by the electric appliance by using the signals. For example, if the signal received by the controller of an air conditioner is the grade R1 having the value 00, the controller does not correct the control target value, and if the grade R2 having the value 01 is inputted, the target indoor temperature is corrected to 28 °C. Further, if the grade R3 having the value 10 is inputted, the target indoor temperature is corrected to 30 °C, and if the grade R4 having the value 11 is inputted, a sleep mode is performed to stop the operation of the air conditioner until the value is differently inputted.

This is used to adjust the amount of the load in correspondence with the emergency index, not to simply cut off the load.

Like this, if another controller exists in the electric appliance, a control signal is provided to the controller, and load cut-off signal and load amount adjustment signal are all provided directly to the controller.

The electric-appliance-end-load-automatic-control-circuit 400 cuts off or connect again the operation of the electric-appliance-load-generation-functioning-part 500 in accordance with given conditions, and even if the broadcasting signal of the grade for the re-connection after the cut-off is checked, the electric-appliance-end-load-automatic-control-circuit 400 further has an electric appliance timer 440 for time management adapted to apply load again after a given period of time is passed. It is not desirable that the electricity deviated from the normal standard reference value be supplied to a consumer for a long period of time, and therefore, even if the electricity having the standard reference value is supplied within a given period of time, the end load being cut off due to their low priority is not connected again immediately by means of the electric-appliance-timer 440. Of course, it is possible to apply the load again through the information of the electricity incoming from the outside, not providing the timing function of the electric appliance timer 440. The timer may be operated with null function having no timing function in accordance to setting. Of course, the timer may be adopted at the time point when the control target value setting signal is generated to output the variation value of the control target value after the given period of time.

The respective parts constituting the electric-appliance-end-load-automatic-control-circuit 400 can be combined in a single electrical device in a module type part, or in a circuit board, and alternatively, they are combined with each other as the combined circuits of separated devices.

According to the present invention, the circuits of the present invention can be integrated as a part of the whole circuit of the electric appliance with other function circuits of the electric appliance to which the present invention is applied and combined with a circuit board or electrical wiring. Alternatively, the circuits of the present invention can be applied to the electric appliance as a form of modularized parts, or as a form of a PCB-shaped module board, or as a form of electrical wire in the air.

The electric appliance to which the present invention is applied may be the electric appliance whose end load is operated, but may be an intermediate body that can be plugged in indoor outlet, while receiving an external electrical plug. Further, the electric appliance may have a plug inserted into an electrical outlet to a form of being attached to the electrical plug of the existing electric appliance, not mounted as a module in the interior of the electric appliance.

### [Industrial Applicability]

The authentication system like the EDPS (Electricity Disaster Preventing System) is introduced into the electric appliances to which the present invention is applied through the system controlling the electricity supply and demand in the field of the electricity industry, and if an emergency state like blackout occurs due to the mismatch in the supply and demand of the electricity, the risk step information is sent by the electricity through appropriate processing and analyzed in the electric appliances such as an electric heater, air conditioner, lamp, elevator, motor and the like used in all kinds of consumers or in the cabinet panel in a building or house. In case of the emergency state, accordingly, the present invention is adopted to a form of a product on which a circuit whose load is adjustable is mounted, thereby preventing the occurrence of the blackout of the whole electric power system network and ensuring the safety of the electric power system network to reduce an enormous fuel cost for electricity power generation, even while the power generation company is maintaining a relatively low power reserve margin.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An electric power supply and demand information transmitting method, the method comprising the steps of:
sorting electric appliances (inclusive of intermediate in which a plug of each electric appliance is put) by kind and applying the same values as each other to the electric appliances having the same priority as electric power supply and demand adjusting objects to apply an electric power supply and demand risk grade value to each electric appliance;
locating the electric appliance where the risk grade is stored at a consumer and performing the demand adjustment according to the grading;
recognizing the approximation degree of a current power reserve margin if the current power reserve margin is closed to 0 %, through a power company or Power Exchange monitoring the electricity supply and demand state in large scale;
selecting power-supply-demand-mismatch risk grades in accordance with the recognized approximation degree of the current power reserve margin to determine whether any electric appliance is a demand adjustment object in accordance with the priority;
determining whether the physical values such as voltage, frequency, and distortion of the fundamental frequency waveform of the electricity supplied to each consumer are deviated from standard reference values or determining the whether the time change patterns of the high and low deviation of the electricity are provided according to the previously agreed protocols;
producing or processing the electricity to which the degree of deviation of the physical values from a standard reference value or the time change pattern in the high and low degrees of the deviation from the standard reference value in accordance with protocols is reflected, in power generation, power transmission, and power distribution steps;
transmitting over a wide area the electricity to each consumer by means of broadcasting at one time;
supplying the electricity to each electric appliance through an outlet of each consumer;
analyzing the fundamental frequency waveform of the electricity incoming from the power incoming end of each electric appliance and comparing the analyzed result with given reference value or the protocols to determine the electric power supply-demand-mismatch risk grade through the time change patterns in the high and low degrees of the deviation of the fundamental frequency waveform of the electricity analyzed according to the protocols; and
transmitting (broadcasting) the electric power-supply-demand-mismatch risk information to all electric appliances in which the electric power-supply-demand-mismatch risk grades are stored in each consumer, at one time.

2. An electric circuit system for adjusting electric power demand applied to a consumer cabinet panel, the electric circuit system comprising of:
an electricity quality evaluating part for analyzing the physical values of the time change patterns in the high and low degrees of the deviation from a normal standard reference value in accordance with protocols;
a risk grade comparing part for comparing the analyzed results through the electricity quality evaluating part with a previously set reference value to recognize the risk grade of the power reserve margin of an electric power system network mapped to the information sent from the electricity quality evaluating part; and
a switch-signal-generating-part for generating electrical, mechanical, optical, or other physical signals by which the branch circuits or end loads are selectively cut off or connected again in accordance with their priority appropriately determined on the basis upon the risk grades checked through the risk-grade-comparing-part.

3. An electric circuit system for adjusting electric power supply and demand applied to an electric appliance (inclusive of intermediate in which a plug of each electric appliance is put), the electric circuit system comprising:
an electric-appliance-electricity-quality-evaluating-part for checking the degree of the deviation ,from standard reference values, of one or combined values of the physical values such as voltage, current, frequency, and distortion of the fundamental frequency waveform of the electricity incoming to the electric appliance from the outside, for checking the time change patterns of the deviation with previously agreed protocols to evaluate the meaning of the compared result on the protocols, or for checking the occurrence and the amount of phase shift of the fundamental frequency waveform electricity incoming;
an electric-appliance-blockage-object-checking-part for determining whether the electric appliance is in the mapped risk grade range by means of comparing the deviation amount of the electricity quality values to previously set reference, analyzing the time change patterns of the deviation according to the protocols previously agreed, or comparing the amount of phase shift to the reference mapped to risk grade;
an electric-appliance-switch-signal-generating-part for generating electrical, mechanical, optical, or other physical switch signals by which the load of the electric load is cut off or connected again, if the electric appliance is determined as a blockage object through the electric-appliance-blockage-object-checking-part and if the electric appliance is determined as an object to be controlled through the electric-appliance-blockage-object-checking-part, or for transmitting ,to a controller of the electric appliance, a control target value setting signal by which a control target value to be controlled by the electric appliance is increased, decreased, set, or changed, or for sending a signal by which the load generated is directly changed; and
an electric-appliance-timer for blocking the generation of the signal of the electric-appliance-switch-signal-generating-part for a determined period of time, or for performing null function having no time-related operation in accordance with the settings.

4. A service system for preventing the occurrence of blackout in an electric power system network, wherein the service system;
analyzes the consumption and demand quantities of the electricity supplied to a large scale consumer group and a power reserve rate as the difference value between the consumption and demand quantities of the electricity, determines electricity supply-demand-mismatch risk grades in accordance with the degree of a current power reserve margin being close to 0% if the current power reserve margin falls under a given value, and sends the risk grade information to each consumer by means of the method in Claim1;
selectively automatically cuts off the end loads of a cabinet panel's branch circuits according to the priority in the consumer by means of the circuit in Claim2; or
selectively cuts off the load in a given electric appliance or varies the control target value to be controlled by the electric appliance to decrease or cut off the load of each consumer having low priority step by step in correspondence with the falling of the power reserve margin by means of the circuit in Claim3;
So selectively remains the power demand of emergency or essential facilities unchanged and fulfills it; and
prevents the blackout of the Electric power system network by the means of the above-mentioned.

5. An electric appliance comprising of:
an electric circuit of claim3; and
an controlling-part which receives the control target value setting signal from electric-appliance-switch-signal-generating-part of the electric circuit of claim3 and changes one or more control target values such as temperature, illumination, RPM, humidity, and torque as physical quantities to be controlled.
